# EUROPEAN PATENT APPLICATION

(11) **EP 3 324 474 A1**
(43) Date of publication of application: **23.05.2018**
(21) Application number: 16857536.3
(22) Date of filing: 20.10.2016
(51) Int. Cl.: H01M 8/18, C01G 31/00, C22B 3/44, C22B 7/02, C22B 34/22, H01M 8/02

(54) **METHOD FOR PRODUCING VANADIUM ELECTROLYTIC SOLUTION FOR REDOX FLOW CELL**

(30) Priority: 20.10.2015 JP 2015206803
(71) Applicant: Le System Co., Ltd., Fukuoka 8390809 (JP)
(72) Inventor: SATO, Kanji, Toride-shi Ibaraki 302-0004 (JP); SAKUMA Akira, Kurume-shi Fukuoka 839-0809 (JP); KOBORI Takeo, Kurume-shi Fukuoka 839-0809 (JP); FURUKAWA Hideki, Kurume-shi Fukuoka 839-0809 (JP); HIRANO Keiji, Kurume-shi Fukuoka 839-0809 (JP); NAKANISHI Tatsuaki, Kurume-shi Fukuoka 839-0809 (JP)
(74) Representative: Müller Schupfner & Partner Patent- und Rechtsanwaltspartnerschaft mbB
(86) International application number: PCT/JP2016/081188
(87) International publication number: WO 2017/069223

(57) **Abstract**

An object of the disclosure is to provide a method of efficiently producing a highly-pure vanadium electrolyte from a combustion residue that is discharged from facilities such as refineries and power plants and contains uncombusted carbon. The method of producing a vanadium electrolyte for redox flow batteries includes a vanadium-dissolved liquid generation step of obtaining a vanadium-dissolved liquid in which vanadium is dissolved. The vanadium is contained in a combustion residue obtained after combustion of a fossil fuel. The method further includes a precipitation step of mixing a sulfide precipitant into the vanadium-dissolved liquid to precipitate a solid substance of precipitate in a reduction state and a wet oxidation step including a process of adding dilute sulfuric acid to the solid substance separated from the liquid to generate a vanadium sulfate solution.

## Description

### BACKGROUND OF THE INVENTION

### 1. Technical Field of the Invention

The present invention relates to a method of producing a vanadium electrolyte for redox flow batteries and particularly to a method of efficiently producing a highly-pure vanadium electrolyte from a starting raw material of a combustion residue that contains uncombusted carbon.

### 2. Description of the Related Art

Redox flow batteries using a vanadium sulfate solution can output a voltage of about 1.3 V and are therefore expected to have higher energy density and efficiency as compared with redox flow batteries using an iron-chromium sulfuric acid solution. In particular, redox flow batteries using a vanadium sulfate solution are expected to be used as backup batteries for natural energy because of various advantages that they can be easily large-sized, responsivity to charge and discharge is high, the amount of electricity stored in the battery can be known in real time, repetition of charge and discharge is possible, safety is high, and environmental burdens are low.

There are methods of producing a vanadium sulfate solution for redox flow batteries, for example, using ammonium metavanadate and vanadium pentoxide (see Patent Documents 1 to 3).

However, these methods involve complicated steps and it cannot be said that producing a stable electrolyte is easy.

There are also methods of producing a vanadium sulfate-based electrolyte using vanadium oxide (V₂O₅ or V₆O₁₃) (see Patent Documents 4 to 6).

However, also in these methods, it cannot be said that producing an electrolyte is easy because, for example, a high-temperature hydrogen reduction process is necessary for producing V₂O₄ which is tetravalent vanadium.

In addition, there is proposed a method of producing a vanadium electrolyte using combustion residues discharged from refineries, power plants, and the like (see Patent Document 7).

Combustion residues discharged from refineries, power plants and the like are generally obtained after combustion of fossil fuel such as heavy oil, and the main components of such combustion residues comprise various types of inorganic components, such as vanadium, and carbon components, such as uncombusted carbon. The proposed method is intended to obtain a highly-pure vanadium compound from such combustion residues, but the steps are complicated. Redox flow batteries require a vanadium electrolyte that is highly pure as much as possible. Unfortunately, it is not easy for this method to produce a highly-pure electrolyte for redox flow batteries.

Patent Document 1: JP5-303973A
Patent Document 2: JP10-251025A
Patent Document 3: JP11-79748A
Patent Document 4: JP8-273692A
Patent Document 5: JP10-125345A
Patent Document 6: JP2000-72441A
Patent Document 7: JP4768116B

### SUMMARY OF THE INVENTION

The present invention has been made in consideration of such technical problems and an object of the present invention is to provide a method of easily and efficiently producing a highly-pure vanadium electrolyte that can be used in redox flow batteries, from a combustion residue that contains vanadium and carbon components.

As a result of intensive studies to solve the above technical problems, the present inventors have accomplished the present invention.

The present invention provides a method of producing a vanadium electrolyte for redox flow batteries. The method includes a vanadium-dissolved liquid generation step of obtaining a vanadium-dissolved liquid in which vanadium is dissolved. The vanadium is contained in a combustion residue obtained after combustion of a fossil fuel. The method further includes a precipitation step of mixing a sulfide precipitant into the vanadium-dissolved liquid to precipitate a solid substance of precipitate in a reduction state and a wet oxidation step including a process of adding dilute sulfuric acid to the solid substance separated from the liquid to generate a vanadium sulfate solution.

The solid substance precipitated in the precipitation step preferably contains vanadium hydroxide, vanadium sulfide, and/or a precursor of vanadium sulfide (V-S-OH), the wet oxidation step preferably includes a process in which a solution obtained by adding dilute sulfuric acid to the solid substance is subjected to wet oxidation dissolution using an oxidant, and vanadium ions contained in the vanadium sulfate solution obtained in the wet oxidation step are preferably tetravalent or less.

For sulfur, for example, the wet oxidation dissolution may change the sulfur into thiosulfate ions and/or sulfate ions and make them soluble rather than dissolve the sulfur in an acid.

The oxidant preferably comprises one or more selected from the group of oxygen, hydrogen peroxide, and ozone.

The method may further comprise an adjusted electrolyte generation step of electrolytically reducing the vanadium sulfate solution obtained in the wet oxidation step to generate the vanadium electrolyte which contains trivalent vanadium ions and tetravalent vanadium ions.

The amount of the trivalent vanadium ions and the amount of the tetravalent vanadium ions in the vanadium electrolyte are more preferably equivalent.

The adjusted electrolyte generation step may be a step that includes electrolytically reducing the tetravalent vanadium ions contained in the vanadium sulfate solution at a negative electrode side to generate the trivalent vanadium ions and electrolytically oxidizing the trivalent vanadium ions contained in the vanadium sulfate solution at a positive electrode side to generate the tetravalent vanadium ions.

The sulfide precipitant preferably comprises one or more selected from the group of hydrogen sulfide, sodium sulfide, ammonium sulfide, sodium hydrosulfide, and sodium polysulfide.

The precipitation step is preferably a step of adjusting pH of a precipitation solution to 1.5 or more and 6.0 or less for a reduction reaction to generate the solid substance of precipitate in the precipitation solution. The precipitation solution may be a solution in which the sulfide precipitant is mixed in the vanadium-dissolved liquid.

The precipitation step is preferably a step of performing the reduction reaction while maintaining a redox potential of the precipitation solution at -200 mV or less to generate the solid substance of precipitate in the mixed solution.

The solid substance of precipitate generated in the precipitation step may comprise vanadium hydroxide, vanadium sulfide, and/or a precursor of vanadium sulfide.

The pH of the precipitation solution in the precipitation step is preferably 4.5 or more and 5.5 or less.

The vanadium-dissolved liquid generation step may be a step that comprises: a combustion step including a process of alkali roasting of the combustion residue; and a dissolution step of mixing a roasted residue obtained in the combustion step and one or more selected from the group of water, an alkaline aqueous solution, and an aqueous solution of a reducing substance to obtain the vanadium-dissolved liquid.

The vanadium-dissolved liquid generation step may be a step that comprises: a combustion step including a process of alkali roasting of the combustion residue; and a dissolution step of dissolving a precipitate into water to obtain the vanadium-dissolved liquid. The precipitate may be obtained by performing a crystallization process for a mixture of an ammonium chloride aqueous solution and a mixed solution that is obtained by mixing a roasted residue obtained in the combustion step and water.

The vanadium-dissolved liquid generation step may be a step that comprises a dissolved liquid generation process step of mixing a precipitate and water to obtain the vanadium-dissolved liquid. The precipitate may be obtained by performing a crystallization process for a heated solution that is generated by heating a combustion residue solution and oxidized with air. The combustion residue solution may be obtained by performing a leaching process for the combustion residue using an acid.

The heated solution generated halfway the dissolved liquid generation process step may be a solution in which a slurry-like substance is dissolved, and a reductant may be further mixed when the precipitate and the water are mixed in the dissolved liquid generation process step.

The combustion step may include a step of combusting the combustion residue as a starting raw material to obtain combustion ash that contains vanadium and an alkali roasting step of performing alkali roasting of the combustion ash, and the combustion residue preferably contains carbon of 20 wt% or more on the dry basis.

The atmosphere temperature is preferably 500°C or higher and 750°C or lower in the combustion step.

The atmosphere temperature is preferably 550°C or higher and 700°C or lower in the alkali roasting step.

A sodium salt used in the alkali roasting step preferably comprises one or more selected from the group of sodium carbonate and sodium hydroxide.

The dissolution step preferably includes stirring a solution mixed with the mixed liquid in a state of 10°C or higher and 90°C or lower.

The precipitation step may comprise: a sulfur precipitation step of mixing a precipitant into the vanadium-dissolved liquid and then adjusting pH to 1.5 or more and 4 or less to precipitate sulfur; and a vanadium precipitation step of adding sodium hydroxide to the vanadium-dissolved liquid, from which the sulfur is separated by filtration in the sulfur precipitation step, to adjust pH and precipitating the solid substance of precipitate in the reduction state.

The method may further comprise a step of dissolving the sulfur obtained in the sulfur precipitation step into an alkali roasting dissolved liquid or an alkaline solution (sodium hydroxide (NaOH) aqueous solution) for wet oxidation to produce a sulfur-modified solution that contains a sulfate radical.

The sulfur-modified solution may be added to a mixed solution of the dissolution step.

The wet oxidation step may include a process in which a solution obtained by adding dilute sulfuric acid to the solid substance is subjected to wet oxidation dissolution using an oxidant. In this case, vanadium ions contained in the vanadium sulfate solution obtained in the wet oxidation step preferably consist of tetravalent ions and trivalent ions.

The amount of the tetravalent ions and the amount of the trivalent ions are more preferably equivalent in the vanadium ions contained in the vanadium sulfate solution obtained in the wet oxidation step.

The oxidant preferably comprises one or more selected from the group of oxygen, hydrogen peroxide, ozone, air, and pentavalent vanadium.

The pH of a solution for precipitating the sulfur in the sulfur precipitation step of the precipitation step is preferably 1.5 or more and 4 or less.

According to the present invention, a highly-pure vanadium electrolyte can be produced easily and efficiently from a combustion residue that contains vanadium and carbon components. According to the present invention, therefore, a high-quality vanadium electrolyte for redox flow batteries can be obtained at low cost.

### BRIEF DESCRIPTION OF DRAWINGS

FIG. 1 is a flowchart illustrating a method of producing a vanadium electrolyte for redox flow batteries;
FIG. 2 is a flowchart illustrating another method of producing a vanadium electrolyte for redox flow batteries;
FIG. 3 is a flowchart illustrating another method of producing a vanadium electrolyte for redox flow batteries (Example 1);
FIG. 4 is a flowchart illustrating another method of producing a vanadium electrolyte for redox flow batteries (Example 1);
FIG. 5 is a flowchart illustrating another method of producing a vanadium electrolyte for redox flow batteries (Example 3);
FIG. 6 is a flowchart illustrating another method of producing a vanadium electrolyte for redox flow batteries (Example 3);
FIG. 7 is a flowchart illustrating a method of producing vanadium pentoxide used in production of a vanadium electrolyte for redox flow batteries;
FIG. 8 is a flowchart illustrating a method of producing a vanadium electrolyte for redox flow batteries using the vanadium pentoxide produced in the production method illustrated in FIG. 7 (Example 4);
FIG. 9 is a flowchart illustrating another method of producing a vanadium electrolyte for redox flow batteries;
FIG. 10 is a flowchart illustrating another method of producing a vanadium electrolyte for redox flow batteries;
FIG. 11 is a flowchart illustrating another method of producing a vanadium electrolyte for redox flow batteries (Example 5);
FIG. 12 is a flowchart illustrating another method of producing a vanadium electrolyte for redox flow batteries (Example 6);
FIG. 13 is a graph illustrating results of comparing the input amount of sulfur when the sulfur recovered in a sulfur precipitation step of the production method of Example 6 is input to a "dissolution step/wet oxidation step" and a recovered amount of sulfur recovered in a subsequent sulfur precipitation step;
FIG. 14 is a graph illustrating results when measuring the amount of trivalent vanadium ions in a produced vanadium sulfate solution while changing the amount of a sulfur-modified solution used in a dissolution step/wet oxidation step of Example 6;
FIG. 15 is a graph illustrating results of charge-discharge performance evaluation for the vanadium electrolyte obtained by the production method of Example 6; and
FIG. 16 is a graph illustrating results of stability evaluation for pentavalent vanadium ions using a hot stage for a vanadium electrolyte obtained in the production method of Example 6.

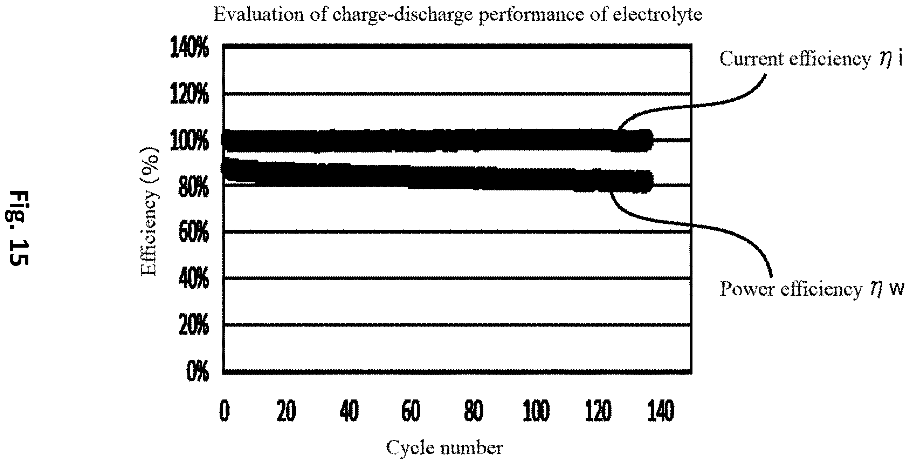

A vanadium redox flow battery was filled with the produced vanadium electrolyte, and the battery was operated to evaluate the charge-discharge performance of the electrolyte (see FIG. 15). The electrode area of a minicell of the battery was 10 cm² and the charge-discharge conditions were a current density of 80 mA/cm², a cell voltage of 1 V to 1.6 V, and a temperature of 25°C. When the frequency was varied from 0 cycle to 130 cycles for discharge and the stability of the current/voltage efficiency was confirmed, it has been confirmed that the electrolyte has comparable performance with that of a highly-pure reagent electrolyte.

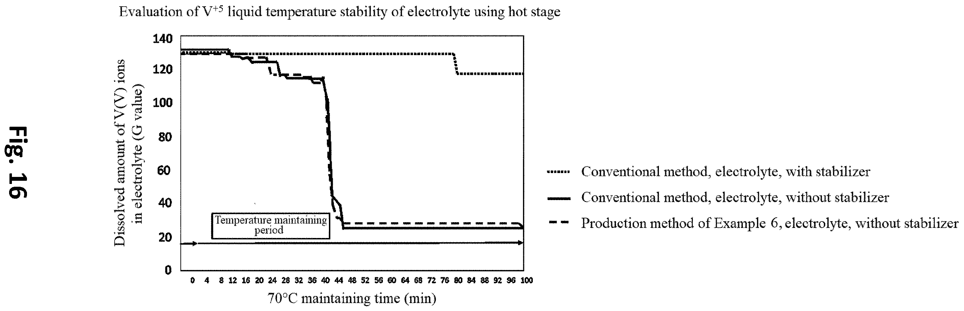

The temperature of the electrolyte was maintained to be constant and the temperature stability of the electrolyte of pentavalent vanadium ions (V⁵⁺) (high-temperature stability of positive electrode liquid electrolyte) was evaluated using a hot stage capable of observing the change of situation (e.g. hue change and precipitation state) (see FIG. 16). As a result, comparable stability with that of an electrolyte made from a highly-pure reagent was obtained under a high temperature of 70°C.

### DESCRIPTION OF THE PREFERRED EMBODIMENT

In the method of producing a vanadium electrolyte according to the present invention, a combustion residue is used as the starting raw material.

The combustion residue as referred to herein may be, for example, carbon sludge generated in a heavy oil gasification furnace, combustion fly ash generated in a heavy oil combustion boiler, petroleum pitch generated in a thermal decomposition apparatus for heavy oil, combustion fly ash generated in a petroleum coke thermal power plant, or the like.

The carbon sludge refers to a water-containing solid content that contains carbon and ash separated by a filtration process from the used washing water (slurry water) when a synthesis gas is washed, such as using a scrubber, in a process of producing the synthesis gas from heavy hydrocarbon oil (vacuum residual oil and the like of crude oil).

The combustion fly ash contains carbon that is generated during the combustion of a fuel, such as heavy oil, and ash that mainly contains heavy metals, such as vanadium (V), nickel (Ni) and iron (Fe), contained in the fuel. When ammonia gas (NH3) is injected to prevent corrosion of ducts, dust collectors and the like due to sulfur trioxide gas (SO₃), the combustion fly ash may contain ammonium sulfate generated by a reaction of sulfuric acid gas and ammonia gas.

The petroleum pitch or petroleum coke refers to a by-product generated when petroleum-based heavy oil is processed by a thermal decomposition apparatus, such as a delayed coker, flexi-coker and visbreaker. Such a by-product contains carbon as the main component, but also contains a certain amount of heavy metals, such as vanadium and nickel, contained in the raw oil.

It is preferred to use a combustion residue that contains about 20 weight% (referred to as "wt%," hereinafter) or more of carbon and about 1wt% or more of vanadium on the dry basis, as the starting raw material. The combustion residue used as the starting raw material may contain water, but is more preferably a dried one. A drying step may therefore be carried out as pretreatment in order to dry the combustion residue used as the starting raw material as much as possible. In an embodiment, for the purpose of improving the drying efficiency and the like, a pulverization step may be carried out for the combustion residue to be dried as necessary before the drying step, and/or a pulverization step may be carried out halfway the drying step (pulverization and drying step).

The amount (wt%) of carbon can be measured using a measurement method, for example, in accordance with the standard analysis method (JIS M8813). The amounts (wt%) of vanadium, other metal components and inorganic components can be measured using a high-frequency inductively-coupled plasma (ICP) emission spectroscopic analysis method and/or a fluorescent X-ray spectroscopic analyzer.

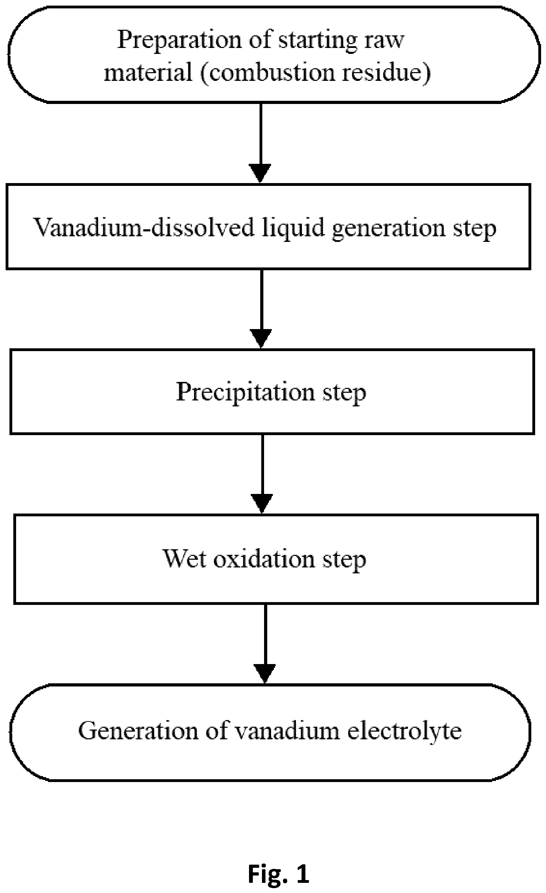

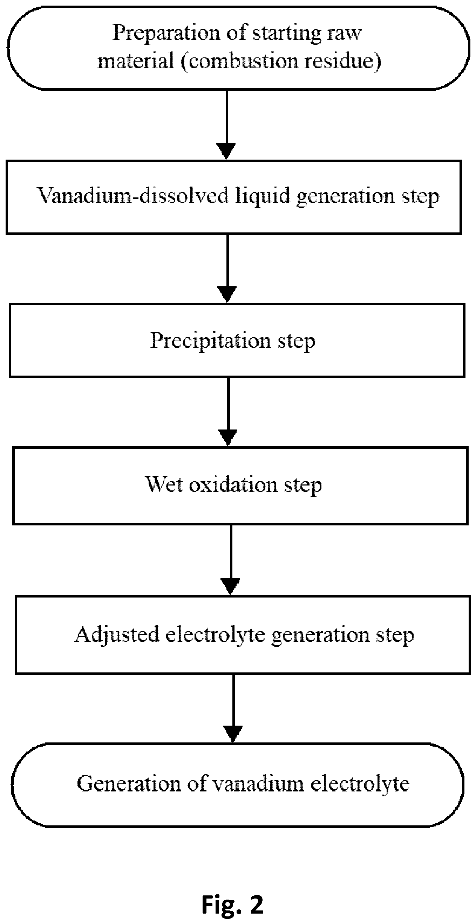

Then, the prepared starting raw material is used as the basis to produce a vanadium electrolyte for redox flow batteries (see FIG. 1). As illustrated in FIG. 1, the method of producing a vanadium electrolyte as described herein includes a vanadium-dissolved liquid generation step, a precipitation step, and a vanadium sulfate solution generation step (wet oxidation step), as basic steps. The method may further include an adjusted electrolyte generation step after the wet oxidation step (see FIG. 2). As each of these steps, various steps having different processing contents can be mentioned as described below.

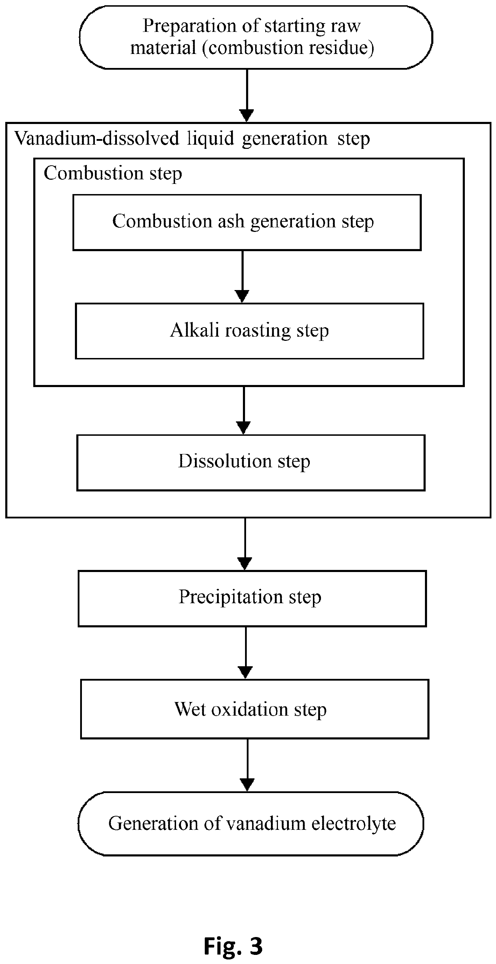

In an embodiment, the vanadium-dissolved liquid generation step used in the method of producing a vanadium electrolyte as described first herein is composed of a combustion step (including a step of obtaining combustion ash and an alkali roasting step) and a dissolution step (see FIG. 3).

First, the combustion step (a part of the vanadium-dissolved liquid generation step) is carried out for the prepared starting raw material (see FIG. 3).

Specifically, the combustion step includes a step of obtaining combustion ash (combustion ash generation step) and a step of performing alkali roasting of the combustion ash (alkali roasting step).

In the step of obtaining combustion ash, the starting raw material is combusted in an atmosphere of an oxygen-containing gas such as air so that uncombusted carbon contained in the combustion residue is combusted. The combustion temperature (atmosphere temperature) is preferably 500°C or higher and more preferably 600°C or higher. If the combustion temperature is lower than 500°C, the carbon may not be sufficiently removed by combustion. In an embodiment, therefore, a supplemental fuel may be added to ensure a combustion temperature of 500°C or higher. It was considered that a higher combustion temperature would be better when removing the carbon by combustion, but the carbon was not able to be efficiently combusted simply by combustion at a high temperature. In practice, the combustion temperature is preferably 750°C or lower. It is considered that, as the combustion temperature increases, a film is formed due to melting of a substance contained in the starting raw material and the film hinders the supply of oxygen necessary for the combustion reaction (oxidation reaction). To prevent such film formation, for example, calcium (Ca) can be added. Further studies have revealed that it is preferred to take into account the melting point of a vanadium oxide (mainly vanadium pentoxide: V₂O₅). The studies suggest that the combustion temperature is more preferably 690°C or lower. This appears to be because the efficient combustion is ensured by steadily preventing the formation of a film of molten salt of the vanadium pentoxide (melting point: about 690°C). The combustion temperature is preferably 600°C to 750°C from an aspect that the handling property will deteriorate if a vanadium compound is melted and becomes a solid in a massive form and an aspect that the melting point may increase by adding calcium hydroxide (Ca(OH)₂) for a countermeasure against the sulfur in petroleum coke.

In the alkali roasting step, the combustion ash (solid content) obtained by the combustion process is mixed with a sodium salt (sodium carbonate: Na₂CO₃, sodium hydroxide: NaOH) and heat-treated to obtain a roasted residue that contains a vanadium compound (e.g. sodium salt of vanadium). In this operation, the vanadium content (concentration) in the roasted residue is further increased because the content of carbon further decreases by alkali roasting.

The main component of the vanadium compound contained in the roasted residue is a water-soluble vanadium oxide (water-soluble sodium vanadate (e.g. NaVO₃)). The roasted residue contains metal components (inorganic substances) other than vanadium, but according to the above-described alkali roasting step, it is possible to generate a water-soluble sodium salt at least of vanadium among a plurality of types of metals contained in the combustion ash. In other words, a water-soluble vanadium sodium salt can be selectively generated. In the dissolution step to be described later, therefore, the vanadium component can be efficiently dissolved into the solution.

To efficiently convert the vanadium compound in the solid content to the sodium salt of vanadium in the alkali roasting step, the heat treatment temperature is preferably 550°C or higher and 850°C or lower. The heat treatment temperature is more preferably 800°C or lower in an embodiment and more preferably 700°C or lower in another embodiment because the melting point of the vanadium compound (sodium orthovanadate: Na₃VO₄) contained in the combustion ash is 850°C to 866°C. From another aspect, the heat treatment temperature is preferably 600°C or lower regardless of whether calcium is added because the melting point of sodium metavanadate (NaVO₃) is about 630°C. When calcium (e.g. calcium hydroxide) is not added, the heat treatment temperature is more preferably 600°C or lower.

The step of obtaining combustion ash and the alkali roasting step can be carried out, for example, using a combustion furnace. These steps may be carried out in separate furnaces or in the same furnace. When carrying out these steps in the same furnace, the step of obtaining combustion ash and the alkali roasting step may be carried out separately and sequentially and may also be carried out concurrently.

Then, the dissolution step (a part of the vanadium-dissolved liquid generation step) is carried out (see FIG. 3).

The dissolution step includes a dissolution process step and a separation step that is carried out after the dissolution step as necessary.

In the dissolution process step, first, the roasted residue obtained in the combustion step is mixed with one or more selected from the group of water, an alkaline aqueous solution, and an aqueous solution of a reducing substance to dissolve vanadium in the roasted residue into the obtained solution. During this operation, it is preferred to stir the solution. Through this operation, a solution in which vanadium ions are dissolved (vanadium-dissolved liquid) is obtained. The vanadium compound in the roasted residue is primarily water soluble sodium vanadate, as described above. According to the dissolution process step of the present embodiment, vanadium can be selectively, efficiently, and easily dissolved as vanadium ions.

An aqueous solution of sodium carbonate (Na₂CO₃), for example, is preferred as the alkaline aqueous solution. The aqueous solution of a reducing substance refers to an aqueous solution that reduces vanadium (e.g. vanadium in a state of being slightly soluble in water, such as vanadium pentoxide) in the roasted residue to tetravalent vanadium ions so that they are dissolved into the solution. Examples of the reducing substance include sodium sulfite Na₂SO₃. Warm water or warm aqueous solution is preferred as the water or aqueous solution and may preferably be heated if necessary. The temperature is preferably an ordinary temperature of 100°C or lower at the atmospheric pressure in an embodiment and 10°C to 90°C in another embodiment. The temperature is more preferably 20°C to 80°C and further preferably 40°C to 60°C.

If there is no residue in the solution obtained in the dissolution process step, the solution obtained in the dissolution process step can be used as a vanadium-dissolved liquid without performing additional processing. If there is a residue, the residue is separated from the solution obtained in the dissolution process step to obtain a vanadium-dissolved liquid (separation step).

In an alternative embodiment, the dissolution step may be modified as below.

That is, the dissolution step may be a step that includes mixing the roasted residue obtained in the combustion step with water to obtain a mixed solution (roasted residue solution), mixing ammonium chloride (NH₄Cl) with the mixed solution, performing a crystallization process for the liquid obtained through the mixture to obtain a precipitate (ammonium metavanadate), and dissolving the precipitate into water or warm water to obtain a vanadium-dissolved liquid. Specific conditions for the water or warm water are as described above and the description will be omitted.

The dissolution step is followed by the precipitation step (see FIG. 3).

Here, the vanadium-dissolved liquid thus obtained is mixed with a sulfide precipitant to prepare a mixed solution, and the obtained mixed solution is subjected to an aggregation reaction in a reduction state to precipitate the vanadium ions in the mixed solution as a vanadium compound (vanadium sulfide). Through this operation, a solid substance (solid substance of precipitate) that contains the vanadium sulfide is precipitated. This solid substance of precipitate is a poorly water-soluble vanadium hydroxide or vanadium sulfide (e.g. V₂S₃ and V₂S₄) and/or a precursor of vanadium sulfide (V-S-OH).

Examples of the sulfide precipitant to be added include hydrogen sulfide (H₂S), sodium sulfide (Na₂S), ammonium sulfide ((NH4)2S), sodium hydrosulfide (sodium hydrogen sulfide: NaSH), and sodium polysulfide (Na₂Sₓ such as Na₂S₄ and Na₂S₅). In the precipitation step, it is preferred to stir the mixed liquid. In the precipitation step, it is preferred not only to add an appropriate amount of the sulfide precipitant but also to add sulfuric acid (H₂SO₄) that makes the solution acidic.

In order to efficiently precipitate and reduce vanadium, the amount of the sulfide precipitant to be added is preferably 0.1 times or more and 5.0 times or less the theoretical equivalent, more preferably 0.5 times or more and 3.0 times or less the theoretical equivalent, and further preferably 0.75 times or more and 2 times or less the theoretical equivalent. The term "theoretical equivalent" as used herein refers to an amount of the sulfide precipitant which can supply necessary and sufficient sulfur when converting the total amount of vanadium ions in the mixed solution to vanadium sulfide by the above aggregation reaction. In other words, it can be said that the theoretical equivalent is an amount of the sulfide precipitant which can supply necessary and sufficient sulfur when pentavalent vanadium is reduced to trivalent by the above aggregation reaction and a vanadium compound is precipitated.

The following method can be exemplified as a method of easily calculating the lower limit amount and the upper limit amount of each range described above for the amount of the sulfide precipitant to be added. For example, a method can be exemplified which includes calculating the lower limit amount using the theoretical equivalent on the assumption that all the vanadium sulfide to be generated is a tetravalent vanadium compound and calculating the value of the upper limit using the theoretical equivalent on the assumption that all the vanadium sulfide to be generated is a trivalent vanadium compound. Another method can also be exemplified which includes calculating the lower limit and the upper limit using the theoretical equivalent on the assumption that the generation amounts of a trivalent vanadium compound and a tetravalent vanadium compound are equimolar. The pH of the solution is preferably within a range of 1.5 or more and 6.0 or less and more preferably within a range of 4.5 or more and 5.5 or less.

In an embodiment, the redox potential is maintained in a reduction state of -200 millivolts (mV) or less. When the sulfide of metals is precipitated in the reduction state while maintaining the pH within this range, sulfide of vanadium among the metals contained in the solid substance of precipitate is selectively precipitated and high purification is possible. This appears to be because maintaining this state allows silicon and sodium to remain in the solution in a soluble state. According to this precipitation step, vanadium ions can be selectively deposited and precipitated as a vanadium sulfide compound.

The wet oxidation step (vanadium sulfate solution generation step) is then carried out (see FIG. 3).

Here, the solid substance of precipitate is separated from the mixed liquid by filtration or the like (solid-liquid separation step), and diluted sulfuric acid is added to the separated solid substance for wet oxidation dissolution to obtain a vanadium sulfate solution.

Through this step, a vanadium electrolyte (vanadium sulfate solution) that contains vanadium ions of tetravalent or less (e.g. VO₂ and V³⁺) is generated.

Thus, according to the method of producing an electrolyte of the present embodiment, the vanadium electrolyte can be produced through a very simple method.

A vanadium sulfate solution in which the vanadium concentration and the sulfuric acid concentration are set to arbitrary concentrations within practical ranges is used as the vanadium electrolyte for redox flow batteries. For example, the vanadium concentration is preferably 1 mol/liter (referred to as "mol/L," hereinafter) or more and 3 mol/L or less and the sulfuric acid concentration is preferably 2 mol/L or more and 7 mol/L or less.

In the following description, an electrolyte in which the vanadium ions contained in the electrolyte are trivalent vanadium ions (V³⁺) may be simply referred to as a "trivalent vanadium electrolyte," an electrolyte in which the vanadium ions are tetravalent vanadium ions (VO²⁺) may be simply referred to as a "tetravalent vanadium electrolyte," and a vanadium electrolyte in which trivalent vanadium ions and tetravalent vanadium ions are mixed in equal amounts or equivalent amounts may be simply referred to as a "mixed vanadium electrolyte," for descriptive purposes. As is known in the art, examples of pentavalent vanadium ions include "VO₂⁺."

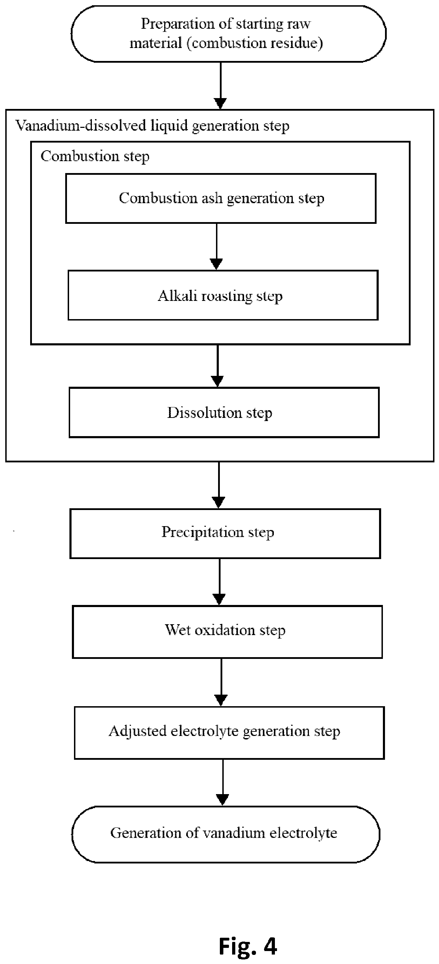

In an embodiment, the vanadium electrolyte (vanadium sulfate solution) obtained in the above-described vanadium sulfate solution generation step (wet oxidation step) may be electrolyzed (electrolytically reduced or electrolytically oxidized) (adjusted electrolyte generation step, see FIG. 4).

The adjusted electrolyte generation step is a step of adjusting the sulfuric acid concentration of the vanadium sulfate solution in an electrolytic bath by electrolytic reduction or electrolytic oxidation. More specifically, the adjusted electrolyte generation step is a step that includes electrolytically reducing the vanadium sulfate solution, which contains tetravalent vanadium ions, at the negative electrode side to generate trivalent vanadium ions and oxidizing the dilute sulfuric acid solution at the positive electrode side to generate oxygen. This step may be terminated at the time point when half of the amount of tetravalent vanadium ions reaches a state of being electrolytically reduced. In this case, a mixed vanadium electrolyte is generated in which the amount of trivalent vanadium ions is equal to the amount of tetravalent vanadium ions in the electrolytic bath as a whole (it is also possible to obtain two electrolytes of trivalent and tetravalent). In an alternative embodiment, after this step is performed to reduce all the vanadium ions in the electrolyte to trivalent vanadium ions, an electrolyte of the equal amount of tetravalent vanadium ions may be added thereto. Also in this case, a mixed vanadium electrolyte is generated in which the amount of trivalent vanadium ions is equal to the amount of tetravalent vanadium ions.

The vanadium electrolyte obtained through the adjusted electrolyte generation step (adjusted vanadium electrolyte) is more preferred as a vanadium electrolyte for redox flow batteries. As described above, the vanadium electrolyte obtained through this step (adjusted vanadium electrolyte) is a vanadium electrolyte that contains both the tetravalent vanadium ions and the trivalent vanadium ions, and can be used in a redox flow battery without performing additional processing. In other words, if a redox flow battery is filled with the adjusted vanadium electrolyte thus obtained and preliminary electrolysis is carried out, the redox flow battery can be prepared in a discharged state. When further charge (electrolysis) is carried out, it can be used as a battery (dischargeable power source).

According to the adjusted electrolyte generation step, a vanadium electrolyte can be obtained in which the amount (mol/L) of trivalent vanadium ions and the amount (mol/L) of tetravalent vanadium ions in the electrolyte are equivalent, as described above. The term "equivalent amount" and other similar terms refer to a situation in which the ratio of the amount (mol/L) of trivalent vanadium ions and the amount (mol/L) of tetravalent vanadium ions is within a range of "4:6" or more and "6:4" or less. The ratio of the amount of trivalent vanadium ions and the amount of tetravalent vanadium ions is preferably within a range of "45:55" or more and "55:45" or less and more preferably within a range of "48:52" or more and "52:48" or less in terms of the equivalent amounts. In an embodiment, it is particularly preferred that the amount of trivalent vanadium ions and the amount of tetravalent vanadium ions be equal (ratio of 1:1). Thus, a vanadium electrolyte that contains equivalent amounts (in particular, equal equivalents (equal number of moles)) of the trivalent vanadium ions and tetravalent vanadium ions is particularly preferred as the vanadium electrolyte for the redox flow batteries.

As described above, according to the production method of the present embodiment, a vanadium electrolyte for redox flow batteries can be easily produced using a combustion residue as the starting raw material.

### Examples

Examples of the production method according to the present embodiment will then be described.

In the present examples, combustion fly ash (combustion residue) combusted in a dedicated boiler for petroleum coke was used as the starting raw material. The composition (wt%) of the combustion fly ash was composed of 50.2% carbon (C), 1.43% vanadium (V), 0.42% nickel (Ni), 0.3% iron (Fe), 0.72% magnesium (Mg), 0.14% calcium (Ca), 0.15% sodium (Na), 8.95% sulfate (e.g. Na₂SO₄), and 2.48% ammonia (NH₃).

### Example 1

First, a combustion step (step of obtaining combustion ash, alkali roasting step) was carried out (see FIG. 3).

Here, a funnel-like fixed-bed reactor was prepared. The combustion step (step of obtaining combustion ash, alkali roasting step) was carried out using this reactor.

The reactor is in a funnel-like shape having an upper inner diameter of 300 mm and a lower inner diameter of 150 mm. The height of the reactor is 200 mm, and the lower part of the reactor is provided with a strainer to allow ventilation. The lower part of the pipe (reactor) is provided with a duct that suctions and exhausts flue gas, and a structure is thus obtained in which air is suctioned from the upper part of the reactor thereby to perform combustion in the reactor. The combustion speed and temperature can be adjusted by the suction air amount. A plurality of thermocouples is provided in a pipe in the reactor to measure the atmosphere temperature. The thermocouples are arranged at certain intervals. Using this pipe, the temperature distribution in the axial direction in the reactor is measured.

In this example, about 100 grams (g) of combustion soot of petroleum coke was input and appropriate amounts of calcium hydroxide (Ca(OH)₂) and sodium carbonate (Na₂CO₃) were added. The calcium hydroxide is used for neutralization of sulfur trioxide (SO₃) generated from sulfur (S) contained in the combustion soot of petroleum coke. For example, the theoretical equivalent of calcium hydroxide necessary for neutralization is added. Here, 9 g of calcium hydroxide was added. The sodium carbonate is a sodium salt used in alkali roasting. Here, for the alkaline roasting, sodium carbonate was added, having a molar mass represented by a value (number of moles) obtained by tripling the number of moles representing the vanadium-containing molar mass (mol) in the combustion soot of petroleum coke.

In the combustion step, 5 g of prepared charcoal was first ignited and placed on the surface of the combustion residue as the starting raw material and, thereafter, the exhaust gas was suctioned from the lower suction and exhaust duct for combustion for 90 minutes. During this combustion period, the suction air amount was adjusted to maintain the combustion temperature (atmospheric temperature) at 750°C or lower (500°C or higher). Thus, in this example, the step of obtaining combustion ash and the alkali roasting step were concurrently carried out in the same reactor (furnace).

Thereafter, 25.1 g of solid substance (referred to as a "roasted residue," hereinafter) was recovered from the filled part in the reactor and used as a sample for a water leaching process.

Constitutional components of the roasted residue were composed of 23.00 wt% ignition residue, 2.93 wt% vanadium, 0.95 wt% nickel, 1.35 wt% iron, 1.55 wt% magnesium, 9.71 wt% calcium, 9.43 wt% sodium, and 14.94 wt% sulfate radical (SO₄).

In this step, first, 21.3 g of the roasted residue obtained by the combustion step was put into 1,000 milliliter (referred to as "ml," hereinafter) of a 1% sodium carbonate aqueous solution and they were stirred at 90°C for one hour to dissolve the roasted residue. Thereafter, the residue in the solution was separated by filtration to obtain 900 mL of a vanadium-dissolved liquid (dissolution step).

The dissolution ratio of vanadium etc. in the obtained vanadium-dissolved liquid was measured using an ICP emission spectroscopic analysis method: 79% vanadium, 1% or less nickel, 1% or less iron, 1% or less magnesium, 1% or less calcium, and the balance sodium. Concentrations in the dissolution liquid were 14,822 mg/L of vanadium, 1 mg/L of nickel, 3 mg/L of iron, 7 mg/L of magnesium, 8 mg/L of calcium, and 40,400 mg/L of sodium.

The content of vanadium etc. in the residue after filtration (15.1 g) was measured: 1.01 wt% vanadium, 1.20 wt% nickel, 1.39 wt% iron, 2.21 wt% magnesium, 13.7 wt% calcium, 1.13 wt% sodium, and 1.47 wt% sulfate radical (SO₄). In the obtained vanadium-dissolved liquid, 79% of vanadium was dissolved and the dissolution amount of other metal components was very small.

Then, the precipitation step (sulfide precipitation step) was carried out (see FIG. 3).

In this step, sodium hydrosulfide (NaSH) was added to the obtained vanadium-dissolved liquid (900 mL). The addition amount of vanadium hydrosulfide was an amount corresponding to the number of moles equal to the number of moles of vanadium. Thereafter, dilute sulfuric acid was added to adjust the pH to about 5.0, and vanadium sulfide (solid substance of precipitate) was precipitated while confirming that the redox potential was -200 mV or less. Subsequently, a cake obtained by separating the precipitated solid substance through filtration was washed with pure water and dried under reduced pressure to obtain a solid substance of precipitate in a dried state. Concentrations (content percentages) of vanadium etc. in the solid substance of precipitate were measured: 69.80 wt% vanadium, 0.07 wt% sodium, and 30.13 wt% sulfur on the dry basis, and no other substances were detected. In other words, the content of impurities such as heavy metals was found to be considerably small. The recovery ratio of vanadium recovered from the vanadium-dissolved liquid was 98%.

The wet oxidation step (vanadium sulfate solution generation step) was then carried out (see FIG. 3).

First, the solid substance of precipitate was added to a sulfuric acid solution and maintained at 50°C for one hour while blowing ozone gas (O₃) as an oxidant into the solution. The addition amount of the solid substance of precipitate was 11 g, the amount of sulfuric acid (H₂SO₄) was 80 mL, and the sulfuric acid concentration was 6 mol/L. Then, a filtration process for removing the solid substance in the obtained solution was performed to obtain a vanadium sulfate solution (vanadium electrolyte).

The vanadium sulfate solution obtained after the filtration had a liquid amount of 94 mL, a vanadium concentration of 1.23 mol/L, and a sulfuric acid concentration of 3.23 mol/L. When the obtained vanadium sulfate solution was analyzed using a potentiometric titration method, all the vanadium ions in the solution were tetravalent vanadium ions, and the solution was suitable as an electrolyte for redox flow batteries. The recovery ratio of vanadium was 79% with reference to the sample (roasted residue) obtained by performing the alkali roasting process.

Thus, according to this example, an electrolyte can be easily produced which is significantly optimum as an electrolyte used when starting the operation of a redox flow battery.

Then, the above-described adjusted electrolyte generation step can be carried out for the vanadium electrolyte obtained in the wet oxidation step thereby to produce an adjusted vanadium electrolyte (see FIG. 4). As described above, the adjusted electrolyte is more excellent as a vanadium electrolyte for redox flow batteries.

### Example 2

In this example, contents of the vanadium sulfate solution generation step (wet oxidation step) are different from those in Example 1, but other steps are the same. The vanadium sulfate solution generation step (wet oxidation step) will therefore be described herein, and the description of other steps will be omitted.

In the vanadium sulfate solution generation step (wet oxidation step) of this example, first, the solid substance of precipitate obtained in the precipitation step was added to a sulfuric acid solution and maintained at 50°C for one hour without blowing ozone gas into the solution. The addition amount of the solid substance of precipitate was 11 g, the amount of sulfuric acid was 80 mL, and the sulfuric acid concentration was 8 mol/L.

Then, a filtration process for removing the solid substance in the obtained solution was performed to obtain a vanadium sulfate solution (vanadium electrolyte).

The vanadium sulfate solution obtained after the filtration had a liquid amount of 89 mL, a vanadium concentration of 1.24 mol/L, and a sulfuric acid concentration of 3.23 mol/L. When the obtained vanadium sulfate solution was analyzed using a potentiometric titration method, the concentration of tetravalent vanadium ions in the solution was 0.58 mol/L and the concentration of trivalent vanadium ions in the solution was 0.66 mol/L. Thus, the vanadium sulfate solution was a vanadium electrolyte in which the trivalent vanadium ions and the tetravalent vanadium ions were mixed at equivalent amounts. In other words, the obtained electrolyte was a vanadium electrolyte composed of vanadium sulfate containing vanadium ions of tetravalent or less. The "equivalent amount" is previously described, so its description will be omitted here. Thus, according to this example, it is possible to more easily produce a vanadium electrolyte that contains equivalent amounts of trivalent vanadium ions and tetravalent vanadium ions.

Examples of a preferred state when starting (restarting) the operation and driving of a redox flow battery include a discharge state and a preliminarily-chargeable state. The discharge state refers to a state in which the positive electrode side (positive electrode bath) is filled with a tetravalent vanadium electrolyte while the negative electrode side (negative electrode bath) is filled with a trivalent vanadium electrolyte. The preliminarily-chargeable state refers to a state in which a redox flow battery is filled with a mixed vanadium electrolyte as the electrolyte of the redox flow battery. In the discharge state, the charge operation can be immediately started and, in this state, the discharge state can be readily obtained by immediate preliminary charge.

In other words, the mixed vanadium electrolyte is more preferred as an electrolyte used when starting the operation of a redox flow battery because the preliminarily-chargeable state can be obtained by preparing only the electrolyte (one type of electrolyte) and filling the redox flow battery with the electrolyte. Moreover, the handling properties, the transportability and the like are more excellent because it is not necessary to prepare a plurality of types of electrolytes.

### Example 3

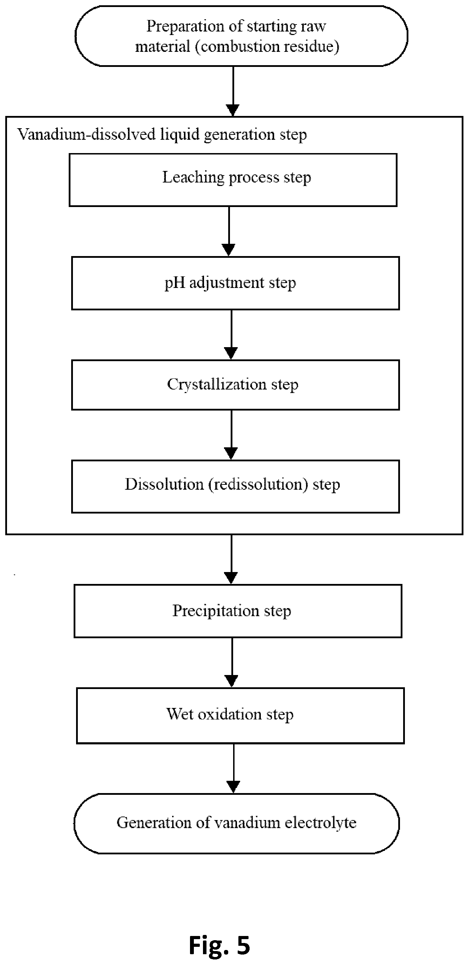

In this example, contents of the vanadium-dissolved liquid generation step are different from those in Example 1, but other steps are the same. The vanadium-dissolved liquid generation step (sulfide precipitation step) will therefore be described herein (see FIG. 5), and the description of other steps will be omitted.

In the vanadium-dissolved liquid generation step of this example, a dissolved liquid generation process step was performed, which will be described below.

In the dissolved liquid generation process step, first, a leaching process using an acid was performed for the combustion fly ash (combustion residue) as the starting raw material to obtain a combustion residue dissolution process liquid. Here, sulfuric acid was used as the acid. The leaching process is a well-known method, so its detailed description will be omitted here.

Then, a pH adjustment process was performed for the obtained process liquid to obtain an ammonia preparation solution of pH 8, and a crystallization process (crystallization process for ammonium metavanadate) was performed for the ammonia preparation solution. Here, the pH adjustment process (neutralization process) was performed by mixing an ammonia aqueous solution (NH₄OH) as a neutralizer to the obtained process liquid. In an embodiment, in addition to the neutralizer, an ammonium chloride aqueous solution may be mixed to the process liquid obtained after the leaching process for the purpose of adjusting the amount of ammonium and the like. Examples of the case of mixing an ammonium chloride aqueous solution may include a case in which ammonium sulfate is not contained in the combustion fly ash (combustion residue) as the starting raw material. In an embodiment, the pH adjustment process (neutralization process) may be carried out by mixing an aqueous solution of ammonium chloride (NH₄Cl) to the obtained process liquid together with sodium hydroxide (NaOH) as a neutralizer.

The crystallization process as used herein includes heating the ammonia preparation solution to 90°C or higher (90°C in this example) to dissolve a slurry-like substance in the preparation solution (heated solution), then performing air oxidation, and decreasing the temperature of the solution to an ordinary temperature to obtain a precipitate. The precipitate was ammonium metavanadate. The ammonia preparation solution after the pH adjustment process (neutralization process) preferably has pH 7 or more and pH 8 or less.

Then, the obtained ammonium metavanadate was dissolved (redissolved) in water (40°C in this example) to obtain a vanadium-dissolved liquid (dissolution step). Here, the vanadium concentration was adjusted to 3,870 mg/L (2.3 mol/L). Sodium hydrosulfide was added to the vanadium-dissolved liquid. The addition amount was an equimolar amount to that of vanadium (2.3 mol/L).

Thereafter, the pH was adjusted to about 5.0 using dilute sulfuric acid, the redox potential was confirmed to be -200 mV or less, and vanadium sulfide was precipitated. Then, a cake obtained by separating the precipitated solid substance through filtration was washed with pure water and dried under reduced pressure to obtain a solid substance of precipitate in a dried state (precipitation step). The recovery ratio of vanadium was 91%.

Thereafter, a vanadium sulfate solution (vanadium electrolyte) was obtained through the wet oxidation step (vanadium sulfate solution generation step) as in Example 1.

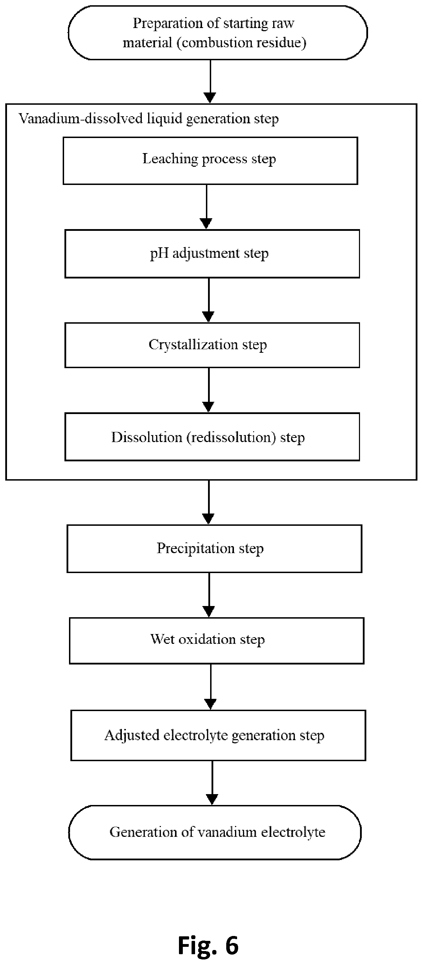

As described in Example 1, the above-described adjusted electrolyte generation step can be carried out for the vanadium electrolyte obtained in the vanadium sulfate solution generation step (wet oxidation step) of this example thereby to produce an adjusted vanadium electrolyte (see FIG. 6). As described above, the adjusted electrolyte is more excellent as a vanadium electrolyte for redox flow batteries.

### Example 4

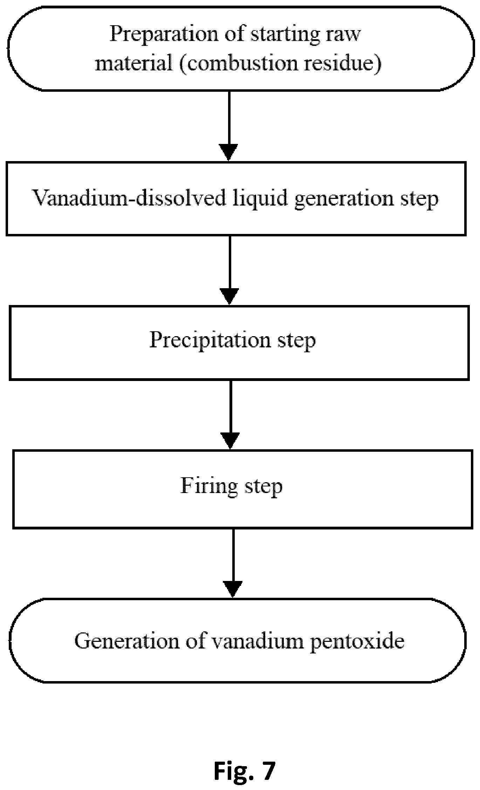

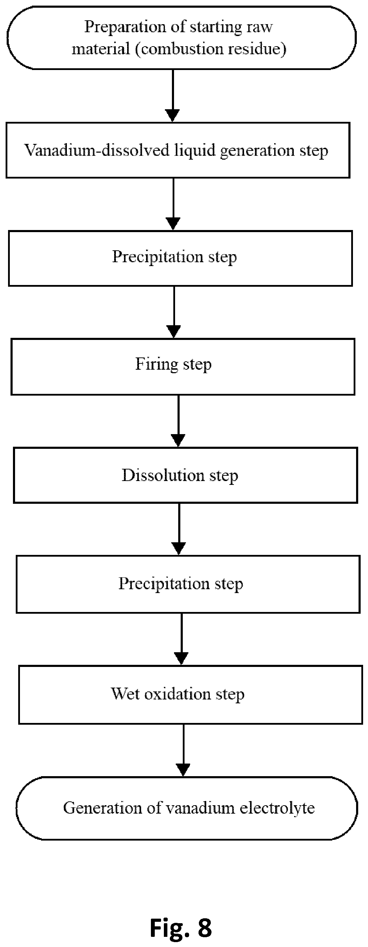

This example involves the same steps from the beginning to the precipitation step for obtaining vanadium sulfide (solid substance of precipitate) as those in Example 1. Accordingly, steps subsequent to the precipitation step, which are different from those in Example 1, will be described herein and the description of other steps will be omitted (see FIGS. 7 and 8).

In this example, 0.500 g of a dried substance (powder) of vanadium sulfide obtained through the same steps as those in Example 1 was sampled and fired at 600°C for one hour in an electric furnace (firing step).

As a result, the slightly green powder (powder of vanadium sulfide) before the firing changed to yellow ocher after the firing. It can thus be determined that yellow ocher vanadium pentoxide was obtained. The mass of the powder was measured to be 0.273 g, and the weight loss ratio was 45.4%. The vanadium content was 30.85% before the firing, but was 55.85% after the firing. The theoretical vanadium content of vanadium pentoxide is 56.01% while 55.85% is the ratio corresponding to 99.71% thereof, and it has thus been found that vanadium pentoxide of very high purity can be obtained at a high recovery ratio (99% or more).

Further, a vanadium electrolytic solution was obtained through dissolving the obtained vanadium pentoxide in dilute sulfuric acid (sulfuric acid solution obtained by double dilution of concentrated sulfuric acid with water) (vanadium pentoxide dissolution step), then performing pH adjustment (pH 4.5 to pH 5.5, specifically pH 5), generating a vanadium sulfide precipitate using sodium hydrosulfide (vanadium sulfide precipitation step), separating the precipitate by filtration, washing the precipitate with pure water to obtain a washed precipitate, and performing a vanadium sulfate solution generation step (wet oxidation step) for the washed precipitate.

Thus, according to this example, it is possible to easily and reliably produce highly-pure vanadium pentoxide, which can be used to easily, rapidly, and reliably produce a highly-pure vanadium electrolyte.

### Example 5

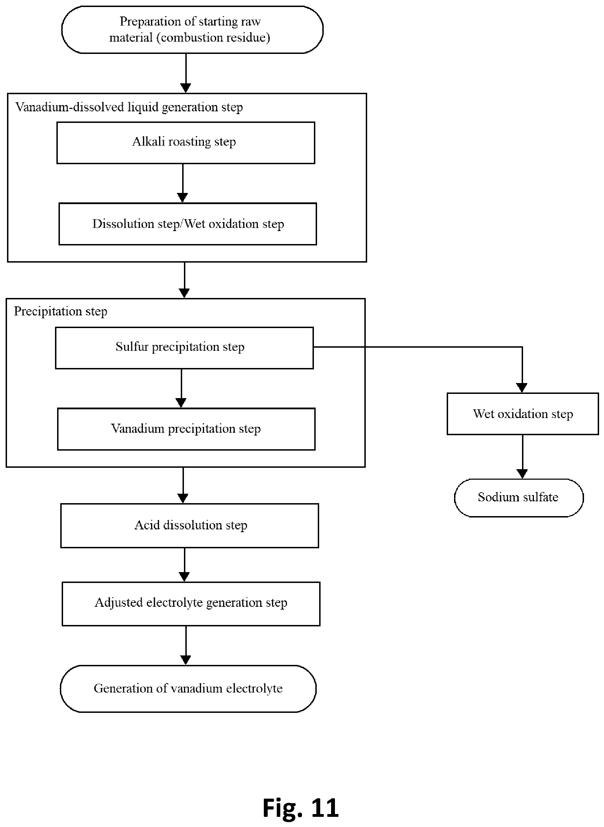

This example involves a different precipitation step as compared with Example 1. Accordingly, the precipitation step different from that in Example 1 will be described herein (see FIG. 11), and the description of other steps will be omitted.

The above-described precipitation step (e.g. Example 1) is a step of precipitating a solid substance (solid substance of precipitate) that contains a vanadium compound such as vanadium sulfide. This solid substance of precipitate is a solid substance of a poorly water-soluble vanadium hydroxide (e.g. tetravalent vanadium hydroxide: VO(OH)₂ and/or trivalent vanadium hydroxide: V(OH)₃) or vanadium sulfide (e.g. V₂S₃ and V₂S₄) and/or a precursor of vanadium sulfide (V-S-OH). Then, a vanadium electrolyte is produced using the obtained solid substance of precipitate (vanadium solid substance). In this precipitation step, sulfur is generated as a by-product when pentavalent vanadium ions are reduced to tetravalent or trivalent vanadium ions using a sulfide precipitant to precipitate the solid substance of precipitate.

As will be understood, the sulfur contained in a vanadium electrolyte used for vanadium redox flow batteries is one of causative substances that cause precipitates in the vanadium electrolyte. It is therefore preferred to remove sulfur from the vanadium electrolyte.

The precipitation step of this example has been found through studying such a technical problem and includes a sulfur precipitation step (sulfur separation step) of separating and removing sulfur prior to the vanadium precipitation step of generating the solid substance of precipitate which contains a vanadium compound and the subsequent acid dissolution step.

In the sulfur precipitation step (sulfur separation step), sodium hydrosulfide (NaSH) as a precipitant (sulfide precipitant) was first added to the obtained vanadium-dissolved liquid (900 mL, concentration of 136.5 mmol [millimole]), and the pH of the solution was adjusted to 3.5 or less while confirming the redox potential being -200 mV or less, to obtain a state in which a solid substance containing sulfur (sulfur-containing solid substance) would precipitate. Specifically, the addition amount of sodium hydrosulfide was an amount (7.62 grams, concentration of 137 mmol [millimole]) corresponding to the number of moles equal to the number of moles of vanadium, and the pH of the solution after preparation was 1.78. The pH is preferably 1.5 or more and 4.0 or less.

Thereafter, the precipitated solid substance was separated through a filtration step using a filter paper (No. 5C) to obtain a cake. The weight of the obtained solid substance (sulfur-containing solid substance) was 39 grams. The component concentration (content) of the solid substance was measured: 67.93 wt% sulfur, 23.38 wt% sodium, and 8.63 wt% vanadium on the dry basis, and no other substances were detected.

Then, in the subsequent vanadium precipitation step, an aqueous solution of sodium hydroxide (NaOH) (NaOH: 20%) was added to the solution from which the sulfur-containing solid substance was separated by filtration, the pH was adjusted to about 4.5, and a solid substance (solid substance of precipitate) containing a vanadium compound such as vanadium sulfide was precipitated while confirming that the redox potential was -200 mV or less. This solid substance of precipitate was separated by filtration to obtain a cake, which was washed with pure water.

The solid substance of precipitate after washing was mixed with 11.5 mol of diluted sulfuric acid and dissolved by stirring to generate a vanadium sulfate solution (acid dissolution step / vanadium sulfate solution generation step).

The obtained vanadium sulfate solution was subjected to measurement of valences of the vanadium ions using a potentiometric titration method and measurement of concentrations using an ICP emission spectroscopic analyzer: vanadium concentration of 1.42 mol/L, trivalent vanadium ion (V³⁺) concentration of 0.02 mol/L, tetravalent vanadium ion (V⁴⁺) concentration of 1.40 mol/L, and sulfuric acid concentration of 4.87 mol/L, and no other substances were detected. In other words, the content of impurities such as heavy metals in the obtained vanadium sulfate solution was considerably small as in Example 1, and the solution was suitable as an electrolyte for redox flow batteries. The recovery ratio of vanadium recovered from the vanadium-dissolved liquid was 98%. Thus, according to this example, vanadium can be recovered at a high recovery ratio. Moreover, according to this example, almost 100% of sulfur can be recovered by the previously-described sulfur separation step, and a vanadium electrolyte from which sulfur is removed at a high removal ratio can be obtained.

In addition, 0.352 g (dry basis) of the recovered solid substance of precipitate was separated and dissolved in 20 ml of an aqueous solution of sodium hydroxide (NaOH: 20%), to which 1.004 grams of vanadium pentoxide (the number of moles of vanadium in the vanadium pentoxide was equal to the number of moles of sodium hydrosulfide) was added and dissolved, and then a solution adjusted to pH 3.9 with dilute sulfuric acid (sulfuric acid solution obtained by double dilution of concentrated sulfuric acid with pure water) was prepared. The valence of vanadium ions in a filtrate obtained by filtration of the solution was measured: 26% of the total vanadium ions were reduced from pentavalent to tetravalent. Also from this result, it has been confirmed that the recovered solid substance of precipitate can be used as a reductant for reducing pentavalent vanadium ions (V⁵⁺).

### Example 6

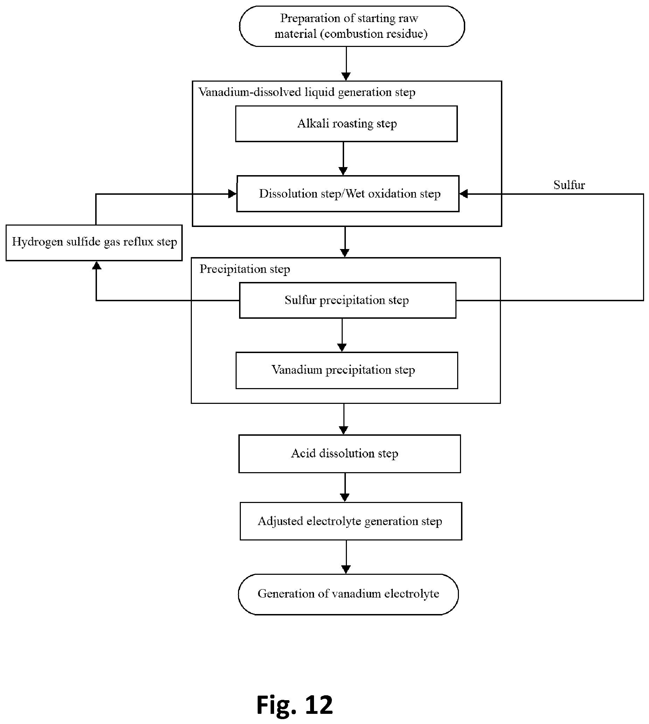

This example is characterized in that a recycle step performed for the separated sulfur is added after the precipitation step as described in Example 5 (see FIG. 12). Accordingly, this recycle step and a dissolution step (dissolution step/wet oxidation step) performed using a solution obtained in the recycle step will be described herein, and the description of other steps will be omitted.

The recycle step is a step of generating a sulfuric acid solution (sulfate radical-containing solution) using the sulfur-containing solid substance obtained in the sulfur precipitation step of the precipitation step.

In the recycle step, 3,040 ml of an aqueous solution of sodium hydroxide (NaOH) (20% NaOH) was prepared first, and sulfur (38 g: dry basis) separated from the sulfur obtained in the sulfur precipitation step was dissolved in this solution.

The obtained solution was analyzed using ion chromatograph: the concentration of thiosulfate was 1.85 mol/L. In addition, 2 equivalents of hydrogen peroxide water were added to 3,000 ml separated from the obtained solution and, as a result of measurement using ion chromatography, thiosulfate was not detected and only sulfate radical was detected (3.9 mol/L). In other words, the obtained solution is an acidic solution of which the main components are sulfate radical, sulfuric acid, sodium sulfate, and the like. When this solution is added to the mixed solution in the "dissolution step/wet oxidation step," it serves as an auxiliary agent for sulfuric acid. Thus, by using this sulfur-modified solution, it is possible to reduce the amount of sulfuric acid to be prepared when producing vanadium, and the production cost of the vanadium electrolyte can be reduced.

As described above, the recovery ratio of vanadium in the production method of Example 5 is as high as 98%. However, fortunately, the sulfur-containing solid substance separated in the sulfur precipitation step contains 8.63 wt% (dry basis) of vanadium, and the sulfur-modified solution obtained in the recycle step also contains a certain amount of vanadium. In the method of producing a vanadium electrolyte of this example utilizing the sulfur-modified solution, therefore, the recovery ratio of vanadium can be further improved.

In addition or alternatively, as illustrated in FIG. 12, the hydrogen sulfide gas generated in the sulfur precipitation step may be brought into contact with and absorbed in a dissolved liquid, such as the mixed solution (roasted residue solution) treated in the "dissolution step/wet oxidation step," by aeration or the like, if necessary. The dissolved liquid is ordinarily alkaline (e.g. about pH 10 to 11) and can therefore absorb acidic hydrogen sulfide gas. Pentavalent vanadium ions in the dissolved liquid react with the absorbed/mixed hydrogen sulfide gas and are reduced to tetravalent vanadium ions, which result in aggregation and precipitation of vanadium sulfide. This aspect can be said to be similar to the recovered sulfur, but gaseous hydrogen sulfide gas effectively contributes to reduction in the amount of sulfuric acid to be used because a more rapid reaction can be expected as compared with the recovered sulfur.

In addition, ammonium metavanadate was prepared and first dissolved in an aqueous solution of sodium hydroxide (NaOH) (20% NaOH) to make a solution of pH 10 having an ammonium metavanadate concentration of 2 wt%. The sulfur-containing solid substance (27.8 g on the dry basis) obtained in the sulfur precipitation step was added to the solution, and sodium hydrosulfide was further added in an amount of the number of moles equivalent to the number of moles of vanadium to adjust the pH to 2.1. Thereafter, this solution was filtrated using a filter paper (No. 5C) to obtain a filtrate and a solid substance (excess sulfur) separated from the solution. The weight of the separated solid substance (excess sulfur) was 124 grams (24.8 grams on the dry basis).

Then, a vanadium sulfate solution (vanadium electrolyte) was obtained through adding an aqueous solution of sodium hydroxide (NaOH) (NaOH: 20%) to the filtrate, from which the excess sulfur was separated by filtration, to adjust the pH to 4.8, filtrating and separating a precipitate of vanadium generated during the adjustment of pH, washing the obtained solid substance with pure water, and dissolving the obtained solid substance in a 70% sulfuric acid aqueous solution. The obtained vanadium sulfate solution had a sulfuric acid concentration of 4.8 mol/L, a volume of 90 ml, and a vanadium concentration of 1.6 mol/L. More specifically, this vanadium sulfate solution was a trivalent and tetravalent mixed solution having a trivalent vanadium ion concentration of 0.9 mol/L and a tetravalent vanadium ion concentration of 0.7 mol/L. As a result of analyzing this vanadium sulfate solution by ion chromatography, thiosulfuric acid was not detected, and all were sulfate radicals (sulfuric acid).

When this experiment (test) was executed repeatedly more than once, the ratio of trivalent vanadium ions increased while the ratio of tetravalent vanadium ions decreased in the vanadium electrolyte produced using the sulfur-containing solid substance (or sulfur-modified solution) in the "dissolution step/wet oxidation step." In other words, it has been found that when the sulfur-containing solid substance is used in the method of producing a vanadium electrolyte, the valence of vanadium ions in the produced vanadium electrolyte tends to decrease. That is, it has been revealed that recovery and reuse of sulfur lead to the reduction in use of an aggregating agent for sulfide and the effect is obtained that the sulfur can be changed to sulfate radical which is not an industrial waste.

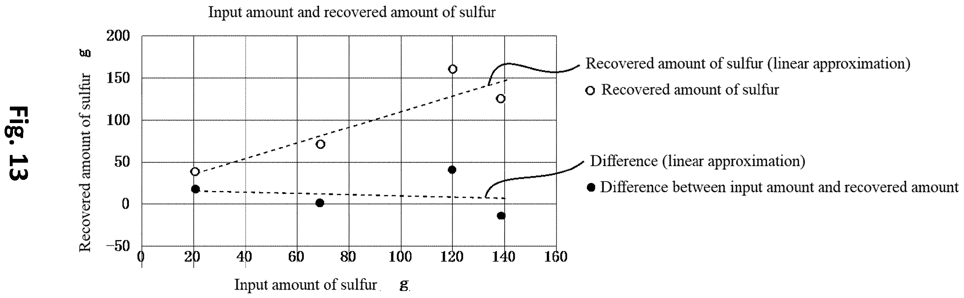

As illustrated in FIG. 13, in comparison between the input amount of sulfur when the sulfur recovered in the sulfur precipitation step was input in the "dissolution step/wet oxidation step" and the recovered amount of sulfur recovered in the subsequent sulfur precipitation step, there is not much difference and it has been found that the sulfur appears to be consumed halfway the generation of the electrolyte to change to sulfate radical.

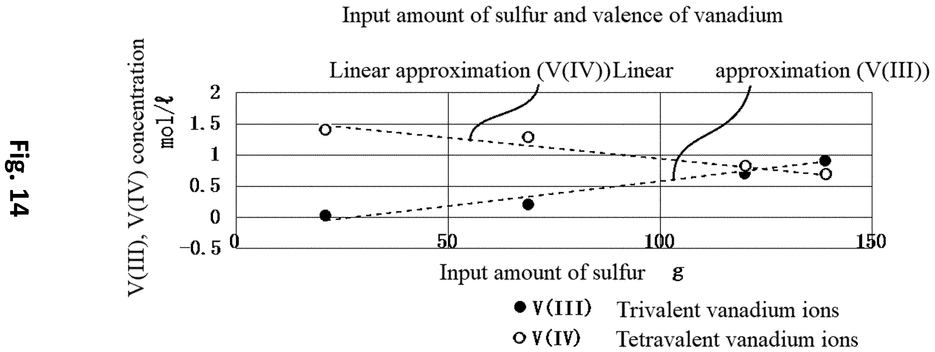

The amount of recovered sulfur (precipitated sulfur obtained by filtration) used in the dissolution step/wet oxidation step was varied to measure the amount of trivalent vanadium ions in the produced vanadium sulfate solution (electrolyte) (see FIG. 14). As a result, it has been found that the amount of trivalent vanadium ions in the electrolyte increases as the input amount of recovered sulfur increases. This has revealed that the recovered sulfur has a reduction action and the alternative solution acts as a reducing and aggregating agent.

A vanadium redox flow battery was filled with the produced vanadium electrolyte, and the battery was operated to evaluate the charge-discharge performance of the electrolyte (see FIG. 15). The electrode area of a minicell of the battery was 10 cm² and the charge-discharge conditions were a current density of 80 mA/cm², a cell voltage of 1 V to 1.6 V, and a temperature of 25°C. When the frequency was varied from 0 cycle to 130 cycles for discharge and the stability of the current/voltage efficiency was confirmed, it has been confirmed that the electrolyte has comparable performance with that of a highly-pure reagent electrolyte.

The temperature of the electrolyte was maintained to be constant and the temperature stability of the electrolyte of pentavalent vanadium ions (V⁵⁺) (high-temperature stability of positive electrode liquid electrolyte) was evaluated using a hot stage capable of observing the change of situation (e.g. hue change and precipitation state) (see FIG. 16). As a result, comparable stability with that of an electrolyte made from a highly-pure reagent was obtained under a constant temperature of a high temperature of 70°C. This evaluation result is obtained in a state in which no additives are added, but a vanadium electrolyte may be made to which additives for stabilizing the quality (e.g. polyphosphate and ammonium phosphate) are added.

The method of producing a vanadium electrolyte for redox flow batteries according to the present invention is not limited to the production method of the above embodiments. The scope of the present invention encompasses any method of producing a vanadium electrolyte which is modified without departing from the gist of the present invention.

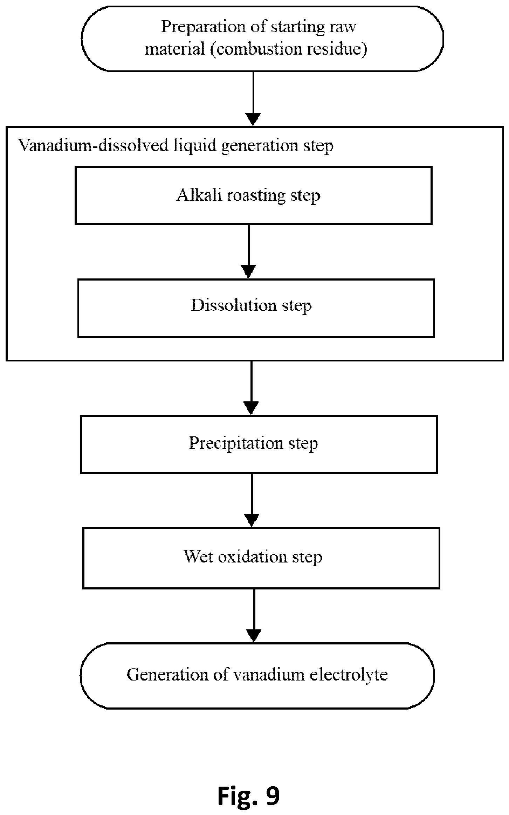

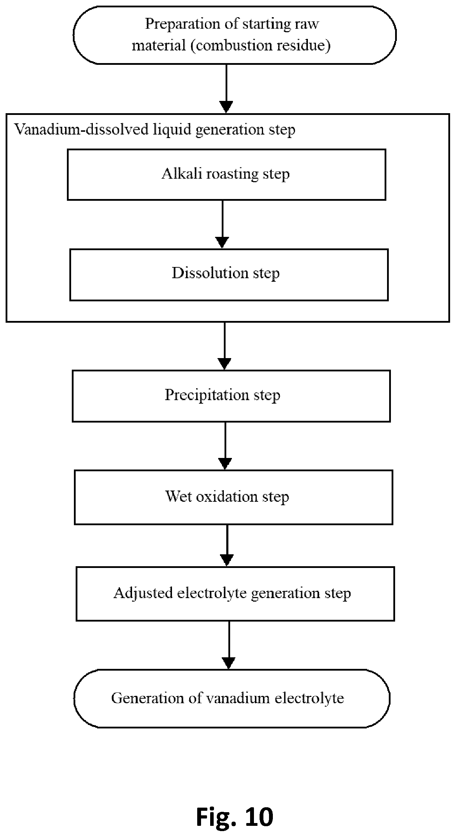

For example, the above-described combustion step is composed of the step of obtaining combustion ash and the alkali roasting step (see FIG. 3), but the combustion step may consist only of a step of alkali roasting of a combustion residue as the starting raw material (see FIG. 9). This combustion step can also be used in a production method that includes an adjusted electrolyte generation step (see FIG. 10). In other words, by subjecting the main starting raw material to a combustion step composed only of alkali roasting, a roast residue that is available in the subsequent dissolution step can be obtained.

The vanadium-dissolved liquid generation step described in Example 3 (see FIG. 5) can also be applied to the method of producing a vanadium electrolyte described in Example 2. That is, the production method of Example 2 can be used as the basis to produce a vanadium electrolyte using the vanadium-dissolved liquid generation step described in Example 3.

## Claims

1. A method of producing a vanadium electrolyte for redox flow batteries, the method comprising:
a vanadium-dissolved liquid generation step of obtaining a vanadium-dissolved liquid in which vanadium is dissolved, the vanadium being contained in a combustion residue obtained after combustion of a fossil fuel;
a precipitation step of mixing a sulfide precipitant into the vanadium-dissolved liquid to precipitate a solid substance of precipitate in a reduction state; and
a wet oxidation step including a process of adding dilute sulfuric acid to the solid substance separated from the liquid to generate a vanadium sulfate solution.

2. The method of producing a vanadium electrolyte as recited in claim 1, wherein
the solid substance precipitated in the precipitation step contains vanadium hydroxide, vanadium sulfide, and/or a precursor of vanadium sulfide,
the wet oxidation step includes a process in which a solution obtained by adding dilute sulfuric acid to the solid substance is subjected to wet oxidation dissolution using an oxidant, and
vanadium ions contained in the vanadium sulfate solution obtained in the wet oxidation step are tetravalent or less.

3. The method of producing a vanadium electrolyte as recited in claim 2, wherein the oxidant comprises one or more selected from a group of oxygen, hydrogen peroxide, and ozone.

4. The method of producing a vanadium electrolyte as recited in any one of claims 1 to 3, further comprising
an adjusted electrolyte generation step of electrolytically reducing the vanadium sulfate solution obtained in the wet oxidation step to generate the vanadium electrolyte which contains trivalent vanadium ions and tetravalent vanadium ions.

5. The method of producing a vanadium electrolyte as recited in claim 4, wherein an amount of the trivalent vanadium ions and an amount of the tetravalent vanadium ions in the vanadium electrolyte are equivalent.

6. The method of producing a vanadium electrolyte as recited in claim 4 or 5, wherein the adjusted electrolyte generation step includes electrolytically reducing the tetravalent vanadium ions contained in the vanadium sulfate solution at a negative electrode side to generate the trivalent vanadium ions and electrolytically oxidizing the trivalent vanadium ions contained in the vanadium sulfate solution at a positive electrode side to generate the tetravalent vanadium ions.

7. The method of producing a vanadium electrolyte as recited in any one of claims 1 to 6, wherein the sulfide precipitant comprises one or more selected from a group of hydrogen sulfide, sodium sulfide, ammonium sulfide, sodium hydrosulfide, and sodium polysulfide.

8. The method of producing a vanadium electrolyte as recited in any one of claims 1 to 7, wherein the precipitation step is a step of adjusting pH of a precipitation solution to 1.5 or more and 6.0 or less for a reduction reaction to generate the solid substance of precipitate in the precipitation solution, wherein the precipitation solution is a solution in which the sulfide precipitant is mixed in the vanadium-dissolved liquid.

9. The method of producing a vanadium electrolyte as recited in any one of claims 1 to 8, wherein the precipitation step is a step of performing a reduction reaction while maintaining a redox potential of the precipitation solution at -200 mV or less to generate the solid substance of precipitate in the mixed solution.

10. The method of producing a vanadium electrolyte as recited in any one of claims 1 to 9, wherein the solid substance of precipitate generated in the precipitation step comprises vanadium hydroxide, vanadium sulfide, and/or a precursor of vanadium sulfide.

11. The method of producing a vanadium electrolyte as recited in any one of claims 1 to 10, wherein pH of the precipitation solution in the precipitation step is 4.5 or more and 5.5 or less.

12. The method of producing a vanadium electrolyte as recited in any one of claims 1 to 11, wherein the vanadium-dissolved liquid generation step comprises:
a combustion step including a process of alkali roasting of the combustion residue; and
a dissolution step of mixing a roasted residue obtained in the combustion step and one or more selected from a group of water, an alkaline aqueous solution, and an aqueous solution of a reducing substance to obtain the vanadium-dissolved liquid.

13. The method of producing a vanadium electrolyte as recited in any one of claims 1 to 11, wherein the vanadium-dissolved liquid generation step comprises:
a combustion step including a process of alkali roasting of the combustion residue; and
a dissolution step of dissolving a precipitate into water to obtain the vanadium-dissolved liquid, wherein the precipitate is obtained by performing a crystallization process for a mixture of an ammonium chloride aqueous solution and a mixed solution that is obtained by mixing a roasted residue obtained in the combustion step and water.

14. The method of producing a vanadium electrolyte as recited in any one of claims 1 to 11, wherein the vanadium-dissolved liquid generation step comprises a dissolved liquid generation process step of mixing a precipitate and water to obtain the vanadium-dissolved liquid, wherein the precipitate is obtained by performing a crystallization process for a heated solution that is generated by heating a combustion residue solution and oxidized with air, wherein the combustion residue solution is obtained by performing a leaching process for the combustion residue using an acid.

15. The method of producing a vanadium electrolyte as recited in claim 14, wherein
the heated solution generated halfway the dissolved liquid generation process step is a solution in which a slurry-like substance is dissolved, and
a reductant is further mixed when the precipitate and the water are mixed in the dissolved liquid generation process step.

16. The method of producing a vanadium electrolyte as recited in claim 12 or 13, wherein
the combustion step includes a step of combusting the combustion residue as a starting raw material to obtain combustion ash that contains vanadium and an alkali roasting step of performing alkali roasting of the combustion ash, and
the combustion residue contains carbon of 20 wt% or more on a dry basis.

17. The method of producing a vanadium electrolyte as recited in claim 16, wherein an atmosphere temperature is 500°C or higher and 750°C or lower in the combustion step.

18. The method of producing a vanadium electrolyte as recited in claim 16 or 17, wherein an atmosphere temperature is 550°C or higher and 700°C or lower in the alkali roasting step.

19. The method of producing a vanadium electrolyte as recited in any one of claims 16 to 18, wherein a sodium salt used in the alkali roasting step comprises one or more selected from a group of sodium carbonate and sodium hydroxide.

20. The method of producing a vanadium electrolyte as recited in any one of claims 11 to 19, wherein the dissolution step includes stirring a solution mixed with the mixed liquid in a state of 10°C or higher and 90°C or lower.

21. The method of producing a vanadium electrolyte as recited in any one of claims 1 to 20, wherein the precipitation step comprises:
a sulfur precipitation step of mixing a precipitant into the vanadium-dissolved liquid and then adjusting pH to 1.5 or more and 4 or less to precipitate sulfur; and
a vanadium precipitation step of adding sodium hydroxide to the vanadium-dissolved liquid, from which the sulfur is separated by filtration in the sulfur precipitation step, to adjust pH and precipitating the solid substance of precipitate in the reduction state.

22. The method of producing a vanadium electrolyte as recited in claim 21, further comprising
a step of dissolving the sulfur obtained in the sulfur precipitation step into an alkali roasting dissolved liquid or an alkaline solution (sodium hydroxide (NaOH) aqueous solution) for wet oxidation to produce a sulfur-modified solution that contains a sulfate radical.

23. The method of producing a vanadium electrolyte as recited in claim 22, wherein the sulfur-modified solution is added to a mixed solution of the dissolution step.

24. The method of producing a vanadium electrolyte as recited in any one of claims 21 to 23, wherein
the wet oxidation step includes a process in which a solution obtained by adding dilute sulfuric acid to the solid substance is subjected to wet oxidation dissolution using an oxidant, and
vanadium ions contained in the vanadium sulfate solution obtained in the wet oxidation step consist of tetravalent ions and trivalent ions.

25. The method of producing a vanadium electrolyte as recited in claim 24, wherein an amount of the tetravalent ions and an amount of the trivalent ions are equivalent in the vanadium ions contained in the vanadium sulfate solution obtained in the wet oxidation step.

26. The method of producing a vanadium electrolyte as recited in any one of claims 21 to 25, wherein the oxidant comprises one or more selected from a group of oxygen, hydrogen peroxide, ozone, air, and pentavalent vanadium.

27. The method of producing a vanadium electrolyte as recited in any one of claims 21 to 26, wherein pH of a solution for precipitating the sulfur in the sulfur precipitation step of the precipitation step is 1.5 or more and 4 or less.
